**Europäisches Patentamt**

**European Patent Office**

**Office européen des brevets**

(19)

(11) Veröffentlichungsnummer : **0 134 023**
**B1**

(12)    **EUROPÄISCHE PATENTSCHRIFT**

(45) Veröffentlichungstag der Patentschrift :
06.05.87

(51) Int. Cl.⁴ : **C 08 C 19/02**

(21) Anmeldenummer : **84109477.4**

(22) Anmeldetag : **09.08.84**

(54) **Herstellung von hydrierten Nitrilkautschuken.**

(30) Priorität : **19.08.83 DE 3329974**

(43) Veröffentlichungstag der Anmeldung :
**13.03.85 Patentblatt 85/11**

(45) Bekanntmachung des Hinweises auf die Patenterteilung : **06.05.87 Patentblatt 87/19**

(84) Benannte Vertragsstaaten :
**DE FR GB IT**

(56) Entgegenhaltungen :
**DE-A- 2 539 132**
**US-A- 3 898 208**
**US-A- 3 993 855**
**CHEMICAL ABSTRACTS, Band 73, Nr. 6, 10. August 1970, Seite 38, Nr. 26397s, Columbus, Ohio, USA;**

(73) Patentinhaber : **BAYER AG**
**Konzernverwaltung RP Patentabteilung**
**D-5090 Leverkusen 1 Bayerwerk (DE)**

(72) Erfinder : **Buding, Hartmuth, Dr.**
**Liebermannstrasse 1**
**D-4047 Dormagen (DE)**
Erfinder : **Königshofen, Heinrich, Dr.**
**Am Mühlenberg 26**
**D-5060 Bergisch Gladbach 2 (DE)**
Erfinder : **Szentivanyi, Zsolt, Dr.**
**Carl-Rumpff-Strasse 9**
**D-5090 Leverkusen (DE)**
Erfinder : **Thörmer, Joachim, Dr.**
**Emil-Nolde-Strasse 39**
**D-5090 Leverkusen (DE)**

**Beschreibung**

Die Erfindung betrifft ein Verfahren zur Hydrierung von Nitrilkautschuken und anschließende Aufarbeitung des Hydrierungsproduktes, wobei die CC-Doppelbindungen zu wenigstens 90 % hydriert werden.

Nitrilkautschuke, die durch Emulsionspolymerisation von (Meth)acrylnitril mit konjugierten Dienen, beispielsweise Butadien und gegebenenfalls kleinen Anteilen weiterer Comonomerer erhalten werden, sind z. B. aus der deutschen Patentschrift 658 172 bekannt. Es ist ferner aus der US-PS 3 700 637 bekannt, solche Nitrilkautschuke zu hydrieren, wobei die Festigkeit der so hergestellten Produkte gegenüber den nicht-hydrierten Ausgangsprodukten verbessert ist, sofern es sich um alternierende Acrylnitril-Butadien-Copolymerisate handelt.

In der deutschen Offenlegungsschrift 25 39 132 wird gezeigt, daß auch die Hydrierung von statistischen Acrylnitril-Butadien-Copolymerisaten in Lösung zu Produkten mit verbesserten Eigenschaften führt. Dabei wird je nach Lösungsmittel eine Selektivität der Reaktion in Bezug auf den Hydrierungsgrad beobachtet.

Als Katalysator wird in beiden Fällen eine Rhodiumkomplexverbindung in Kombination mit einem Überschuß des Komplexliganden verwendet, vorzugsweise Tris-(triphenylphosphan)-rhodium(I)-chlorid zusammen mit Triphenylphosphan, wobei für die Menge an Rhodiumverbindung weite Grenzen gesteckt sind, effektiv aber größere Mengen, nämlich 1 Gew.-% (Deutsche Offenlegungsschrift) bzw. 2 Gew.-% (US Patentschrift), bezogen auf Kautschukfeststoff, eingesetzt werden.

An Komplexligand, z. B. Triphenylphosphan, werden nach Offenlegungsschrift 5 bis 25 Gew.-%, bezogen auf Festkautschuk, eingesetzt. Nach US Patentschrift wird die 10 bis 150-fache molare Menge des Liganden auf ein Mol Rhodiumkomplexverbindung eingesetzt.

Nach der Hydrierung wird nach Stand der Technik der Rhodium-Katalysator aus den Hydrierungslösungen zurückgewonnen, da seine effektiv eingesetzte Menge die Eigenschaften des hydrierten Polymers ungünstig beeinflussen würde und da die Rückgewinnung des Katalysators aus ökonomischen Gründen ratsam ist. Die Hydrierungen können in weiten Druck- und Temperaturbereichen durchgeführt werden, so nach DE-OS 25 39 132 zwischen 5 und 300 bar Wasserstoff und 50 bis 150 °C, nach US-PS 3 700 637 bei 7 bis 690 bar Wasserstoff und 100 °C. Effektiv werden 60 bis 70 bar Wasserstoff und Temperaturen von 100 °C gewählt.

Aus den so erhaltenen Produkten, sofern die Hydrierungsgrade der Doppelbindungen über 90 % liegen, durch peroxidische Vernetzung hergestellte Vulkanisate zeigen keine optimalen Eigenschaften.

Es wurde nun überraschend gefunden, daß Vulkanisate mit hervorragenden Eigenschaften erhalten werden und daß eine Rückgewinnung des Rhodium-Katalysators unnötig wird, wenn man die Hydrierung von statistischen Copolymerisaten aus konjugierten Dienen und (Meth)acrylnitril mit nur geringen Mengen an Rhodium-Katalysator und höchstens 2 Gew.-% an Triphenylphosphan innerhalb ausgewählter Druck- und Temperaturbereiche durchführt.

Gegenstand der Erfindung ist daher ein Verfahren zur Herstellung hydrierter Nitrilkautschuke durch Hydrieren statistischer Copolymerisate aus 85 bis 52 Gew.-% eines konjugierten Diens, 15 bis 48 Gew.-% (Meth)acrylnitril und 0 bis 10 Gew.-% weiterer, mit Dien und (Meth)acrylnitril copolymerisierbarer Monomerer, gelöst in einem aromatischen Lösungsmittel unter Verwendung von Tris-(triphenylphosphan)-rhodium(I)-halogenid als Katalysator bei Wasserstoffdrücken von 20 bis 350 bar und Temperaturen von 100 bis 145 °C, wobei die CC-Doppelbindungen zu wenigstens 90 % hydriert werden und Aufarbeitung, dadurch gekennzeichnet, daß man der Reaktionsmischung höchstens 2 Gew.-% Triphenylphosphan und 0,05 bis 0,6 Gew.-% Tris-(triphenylphosphan)-rhodium(I)-halogenid, jeweils bezogen auf Festkautschuk, zusetzt.

Die Aufarbeitung des Hydrierungsansatzes kann nach unterschiedlichen Verfahren erfolgen. Vorzugsweise wird das aromatische Lösungsmittel abdestilliert oder durch Einblasen von Wasserdampf entfernt und der Kautschuk getrocknet. Er kann weiterhin nach bekannten Techniken zerkleinert werden.

Als konjugiertes Dien kommen z. B. Isopren und vorzugsweise Butadien, als Nitril z. B. Methacrylnitril und vorzugsweise Acrylnitril in Frage.

Bevorzugt wird ein binäres Polymerisat aus Butadien und Acrylnitril hydriert.

Vorzugsweise wird weniger als 1 Gew.-% Triphenylphosphan zugesetzt. Insbesondere wird triphenylphosphanfrei gearbeitet. Vorzugsweise werden 0,08 bis 0,2 Gew.-% an Rhodium-Komplexverbindung eingesetzt.

Der Hydrierungsgrad liegt insbesondere über 95 %, vorzugsweise über 99 %. Als Lösungsmittel hat sich insbesondere Chlorbenzol bewährt. Der Wasserstoffdruck beträgt vorzugsweise 30 bis 200 bar.

Es hat sich überraschender Weise gezeigt, daß sich Mooney-Viskosität, Mooney-Relaxation, Defo-Härte und Defo-Elastizität gezielt über die Menge des eingesetzten Rhodium-Katalysators steuern lassen, ohne daß andere Eigenschaften, insbesondere die der Vulkanisate beeinträchtigt werden.

So erhält man z. B. mit 0,15 Gew.-% Rhodium-Katalysator aus einem NBR mit 65,1 Gew.-% Butadien, Rest Acrylnitril, ein vollständig hydriertes Produkt mit einer Mooney-Viskosität von 70, mit 0,3 Gew.-% unter sonst gleichen Bedingungen eine Mooney-Viskosität von 82 und mit 0,4 Gew.-% unter sonst gleichen Bedingungen eine Mooney-Viskosität von 96.

2

Die Mooney-Viskosität und -Relaxation sowie Defo-Härte und -Elastizität stellen ein Maß für die Verarbeitbarkeit von Elastomeren dar (P.S. Johnson in Kautschuk und Gummi, Kunststoffe 33, S. 725 ff. (1980) ; R. Koopmann in Kautschuk und Gummi, Kunststoffe 36, S. 108 ff. (1983) und « Lexikon der Kautschuk-Technologie » von Schnetger (Verlag Dr. Hüther, 1981)).

Produkte mit niedrigerer Mooney-Viskosität, niedrigerer Defo-Elastizität und niedrigerer Mooney-Relaxation sind besser verarbeitbar ; solche Produkte lassen sich z. B. besser und energiesparender mischen, extrudieren, verspritzen und verformen.

Aus den erfindungsgemäß hydrierten Kautschuken werden in üblicher Weise durch peroxidische Vernetzung Vulkanisate hergestellt, die sich aufgrund ihres hervorragenden Eigenschaftsbildes insbesondere für hochwertige Dichtungsmaterialien bei extremen Beanspruchungen eignen.

## Beispiel 1

Eine Lösung von 3 kg eines statistischen Acrylnitril/Butadien-Copolymers mit 34,9 Gew.-% Acrylnitril, ML 1 + 4/100 °C = 29 in 27 kg Chlorbenzol mit einem Sauerstoffgehalt von < 5 ppm und eine Lösung von 4,5 g Tris-(triphenylphosphan)-rhodium(I)-chlorid in 2 kg Chlorbenzol mit einem Sauerstoffgehalt von < 5 ppm werden in einem mit Stickstoff (Sauerstoffgehalt < 10 Vol-ppm) inertisierten 40 l-Autoklaven vorgelegt. Man tauscht das Inertgas gegen Wasserstoff aus und hydriert 5 h bei 120 °C und 190 bar Wasserstoff. Das Chlorbenzol wird durch Einblasen von Wasserdampf entfernt und das Polymer im Vakuum getrocknet. Der Hydrierungsgrad beträgt 99,7 % (infrarotspektroskopisch bestimmt).

Analog werden weitere Polymere unter Benutzung unterschiedlicher Katalysatormengen hergestellt. Die folgende Tabelle 1 gibt die Werte (a) der Mooney-Viskosität nach DIN 53523 (ML 1 + 4), (b) der Mooney-Relaxation MR (%), (c) der Defo-Härte $V_{10}$ (Ns) und (d) der Defo-Elastizität (1/10 mm) in Abhängigkeit von der Katalysatorkonzentration in Gew.-%, bezogen auf Festkautschuk, an.

### Tabelle 1

| Kat.-Konz. (Gew.-%) | 0,15 | 0,3 | 0,4 | 0,6 | 0,8 | 1,0 |
|---|---|---|---|---|---|---|
| (a ; 100 °C) | 70 | 82 | 96 | 122 | 140 | nicht bestimmbar |
| (b) | 6,4 | 10 | 15,7 | 16,8 | 18,6 | nicht bestimmbar |
| (c) | 170 | 236 | 283 | 340 | 435 | 524 |
| (d) | 31,8 | 37,4 | 40 | 42 | 45 | 51 |

## Beispiel 2

Aus den Produkten nach Beispiel 1 wurden nach folgender Rezeptur Mischungen hergestellt :

100,00 Gew.-Teile hydriertes Polymer
2,50 Gew.-Teile Wachs (Lunacera® C 44 der Fa. L.W. Foller)
6,50 Gew.-Teile Magnesiumoxid (Maglite® DE der Fa. Merck + Co)
3,50 Gew.-Teile Zinkoxid (Zinkoxyd aktiv® der Fa. Bayer AG)
1,10 Gew.-Teile styrolisiertes Diphenylamin (Vulkanox® DDA der Fa. Bayer AG)
0,40 Gew.-Teile Zinksalz des 2-Mercaptobenzimidazols (Vulkanox® ZMB 2 der Fa. Bayer AG)
50,00 Gew.-Teile Ruß N 774 (Durex® O der Fa. Degussa)
1,75 Gew.-Teile Triallylisocyanurat
7,00 Gew.-Teile 2,5-Dimethyl-2,5-ditert.-butyl-peroxihexan (45 %ig)

In Tabelle 2 sind die in Abhängigkeit von der Katalysatorkonzentration ermittelten Werte der Mischung (I) und der Vulkanisate (II) aufgeführt. Die Bedingungen der Vulkanisation sind 18 Minuten/180 °C ; Temperung 17 Stunden/150 °C ; S2-Stab.

Für die Bestimmungen wurden in diesem und im folgenden Beispiel die Normen DIN 53 504, 53 505, 53 517 Methode B, 53 512 verwendet, wobei F die Zugfestigkeit, D die Bruchdehnung, $M_{100}$ den Spannungswert bei 100 % Dehnung, $H_{23}$ die Härte Shore A bei 23 °C, $E_{23}$ die Rückprallelastizität bei 23 °C und CS den Compression Set bedeuten.

### Tabelle 2

| | Kat.-Konz. (Gew.-%) | 0,15 | 0,3 | 0,4 | 0,6 | 0,8 | 1,0 |
|---|---|---|---|---|---|---|---|
| | (a ; 120 °C) | 84 | 94 | 104 | 110 | 119 | 132 |
| | (b) | 7,5 | 9,1 | 11,1 | 12,5 | 13,5 | nicht meßbar |
| (I) | (c) | 297 | 370 | 410 | 506 | 576 | 694 |

**0 134 023**

(Fortsetzung)

| Kat.-Konz. (Gew.-%) | | 0,15 | 0,3 | 0,4 | 0,6 | 0,8 | 1,0 |
|---|---|---|---|---|---|---|---|
| (II) | (d) | 21,7 | 28,8 | 30,4 | 33,6 | 34,1 | 43,0 |
| | F (MPa) | 17,1 | 17,4 | 17,6 | 17,5 | 17,9 | 17,6 |
| | D (%) | 270 | 265 | 275 | 260 | 275 | 265 |
| | $M_{100}$ (MPa) | 7,4 | 7,9 | 7,8 | 7,9 | 8,1 | 7,7 |
| | $H_{23}$ | 77 | 77 | 76 | 78 | 77 | 78 |
| | $E_{23}$ (%) | 35 | 35 | 35 | 35 | 34 | 35 |

## Beispiel 3

Analog Beispiel 1 mit einer Katalysatorkonzentration von 0,15 Gew.-% wurden Hydrierungen in Anwesenheit unterschiedlicher Mengen an Triphenylphosphan in Gew.-% bezogen auf Festkautschuk durchgeführt. Die folgende Tabelle 3 zeigt die Mooney-Viskosität der Mischung, die zusätzlich 1 Gew.-Teil Stearinsäure enthielt, und die Eigenschaften der Vulkanisate nach einer Vulkanisation von 18 Minuten/180 °C, Temperung 17 Stunden/150 °C am S2-Stab. Die Mischungszusammensetzung entspricht Beispiel 2.

### Tabelle 3

| Konz. an Triphenylphosphan (Gew.-%) | 0 | 0,5 | 1 | 2,5 | 5 |
|---|---|---|---|---|---|
| ML 1 + 4/120 °C | 75 | 76 | 75 | 74 | 71 |
| F (MPa) | 18,5 | 18,4 | 18,1 | 18,0 | 17,4 |
| D (%) | 300 | 315 | 340 | 390 | 470 |
| $M_{100}$ (MPa) | 8,4 | 8,1 | 7,7 | 6,7 | 5,4 |
| $M_{200}$ (MPa) | 15,6 | 14,9 | 14,2 | 13,1 | 11,1 |
| $M_{300}$ (MPa) | 18,5 | 18,0 | 17,3 | 16,1 | 14,1 |
| $H_{23}$ | 75 | 74 | 74 | 73 | 71 |
| $E_{23}$ (%) | 32 | 32 | 33 | 33 | 32 |
| CS 70 h/23 °C (%) | 10,9 | 11,5 | 12,9 | 15,1 | 19,8 |
| CS 70 h/125 °C (%) | 11,5 | 12,1 | 12,6 | 15,6 | 19,1 |
| CS 70 h/150 °C (%) | 17,2 | 17,3 | 17,2 | 19,2 | 23,6 |

## Beispiel 4

Entsprechend Beispiel 1 wurden weitere Acrylnitril-Butadien-Copolymerisate hydriert. Die Hydrierungsgrade lagen jeweils über 99,5 %.

Die folgende Tabelle 4 gibt die gefundenen Werte in Abhängigkeit vom Acrylnitrilgehalt des Copolymers (Gew.-%) und von der Rhodium-Katalysatormenge (Gew.-%, bezogen auf Festkautschuk).

### Tabelle 4

| Acrylnitrilgehalt (Gew.-%) | 18 | 28 | | 39 | |
|---|---|---|---|---|---|
| Kat.-Konz. (Gew.-%, bezogen auf Festkautschuk) | 0,5 | 0,5 | 0,15 | 0,25 | 0,5 |
| (a) | 134 | 115 | 96 | 124 | 138 |
| (c) | 34 | 28 | 26 | 29 | 36 |
| (d) | 52 | 45 | 41 | 43 | 47 |

## Beispiel 5

Entsprechend Beispiel 1 wurden 4,5 kg Polymer in 26,2 kg Chlorbenzol mit 7,1 g Tris-(triphenylphosphan)-rhodium(I)-bromid 6 h bei 120 °C und 150 bar Wasserstoff hydriert. Der Hydrierungsgrad betrug 99,7 %.

## Beispiel 6

Entsprechend Beispiel 1 wurden 3 kg Polymer in 27 kg Chlorbenzol mit einer Lösung von 4,5 g

4

Katalysator und 3 g Triphenylphosphan in 2 kg Chlorbenzol 15 Stunden bei 120 °C und 40 bar Wasserstoff hydriert. Der Hydrierungsgrad betrug 99,6 %.

**Patentansprüche**

1. Verfahren zur Herstellung hydrierter Nitrilkautschuke durch Hydrieren statistischer Copolymerisate aus 85 bis 52 Gew.-% eines konjugierten Diens, 15 bis 48 Gew.-% (Meth)acrylnitril und 0 bis 10 Gew.-% weiterer, mit Dien und (Meth)acrylnitril copolymerisierbarer Monomerer, gelöst in einem aromatischen Lösungsmittel unter Verwendung von Tris-(triphenylphosphan)-rhodium(I)-halogenid als Katalysator bei Wasserstoffdrücken von 20 bis 350 bar und Temperaturen von 100 bis 145 °C, wobei die CC-Doppelbindungen zu wenigstens 90 % hydriert werden und Aufarbeitung, dadurch gekennzeichnet, daß man der Reaktionsmischung höchstens 2 Gew.-% Triphenylphosphan und 0,05 bis 0,6 Gew.-% Tris-(triphenylphosphan)-rhodium(I)-halogenid, jeweils bezogen auf Festkautschuk, zusetzt.

2. Verfahren nach Anspruch 1, dadurch gekennzeichnet, daß die Menge an Triphenylphosphan weniger als 1 Gew.-% beträgt.

3. Verfahren nach Anspruch 1, dadurch gekennzeichnet, daß triphenylphosphanfrei hydriert wird.

4. Verfahren nach Anspruch 1, dadurch gekennzeichnet, daß ein binäres Polymerisat aus Butadien und Acrylnitril hydriert wird.

5. Verfahren nach Anspruch 1, dadurch gekennzeichnet, daß der Hydriergrad über 95 % liegt.

6. Verfahren nach Anspruch 1, dadurch gekennzeichnet, daß der Hydriergrad über 99 % liegt.

7. Verfahren nach Anspruch 1, dadurch gekennzeichnet, daß in Chlorbenzol hydriert wird.

8. Verfahren nach Anspruch 1, dadurch gekennzeichnet, daß die Katalysatormenge 0,08 bis 0,2 Gew.-% beträgt.

9. Verfahren nach Anspruch 1, dadurch gekennzeichnet, daß der Druck 30 bis 200 bar beträgt.

**Claims**

1. Process for the production of hydrogenated nitrile rubbers by hydrogenating statistic copolymers of 85 to 52 % by weight of a conjugated diene, 15 to 48 % by weight of (meth)acrylonitrile and 0 to 10 % by weight of other monomers copolymerisable with diene and (meth)acrylonitrile, dissolved in an aromatic solvent using tris-(triphenylphosphane)-rhodium (I) halide as catalyst under hydrogen pressures of 20 to 350 bars and at temperatures of 100 to 145 °C, the CC double bonds being hydrogenated to an extent of at least 90 %, and working up the product, characterised in that at most 2 % by weight of triphenylphosphane and 0.05 to 0.6 % by weight of tris-(triphenylphosphane)-rhodium (I) halide, in each case based on solid rubber, are added to the reaction mixture.

2. Process according to claim 1, characterised in that the quantity of triphenylphosphane is less than 1 % by weight.

3. Process according to claim 1, characterised in that the hydrogenation is carried out in the absence of triphenylphosphane.

4. Process according to claim 1, characterised in that a binary polymer of butadiene and acrylonitrile is hydrogenated.

5. Process according to claim 1, characterised in that the degree of hydrogenation is higher than 95 %.

6. Process according to claim 1, characterised in that the degree of hydrogenation is higher than 99 %.

7. Process according to claim 1, characterised in that the hydrogenation is carried out in chlorobenzene.

8. Process according to claim 1, characterised in that the quantity of catalyst is 0.08 to 0.2 % by weight.

9. Process according to claim 1, characterised in that the pressure is 30 to 200 bars.

**Revendications**

1. Procédé de production de caoutchoucs nitriliques hydrogénés par hydrogénation de copolymères statistiques de 85 à 52 % en poids d'un diène conjugué, 15 à 48 % en poids de (méth)acrylonitrile et 0 à 10 % en poids d'autres monomères copolymérisables avec un diène et le (méth)acrylonitrile, en solution dans un solvant aromatique avec utilisation d'un halogénure de tris-(triphénylphosphane)-rhodium-(I) comme catalyseur à des pressions d'hydrogène de 20 à 350 bars et à des températures de 100 à 145 °C, les doubles liaisons carbone-à-carbone étant hydrogénées à 90 % au moins, puis traitement de purification, caractérisé en ce qu'on ajoute au mélange réactionnel au maximum 2 % en poids de triphénylphosphane et 0,05 à 0,6 % en poids d'halogénure de tris-(triphénylphosphane)-rhodium-(I), dans chaque cas par rapport au caoutchouc solide.

2. Procédé suivant la revendication 1, caractérisé en ce que la quantité de triphénylphosphane s'élève à moins de 1 % en poids.

3. Procédé suivant la revendication 1, caractérisé en ce que l'hydrogénation est conduite en l'absence de triphénylphosphane.

4. Procédé suivant la revendication 1, caractérisé en ce qu'on hydrogène un produit de polymérisation binaire de butadiène et d'acrylonitrile.

5. Procédé suivant la revendication 1, caractérisé en ce que le degré d'hydrogénation est supérieur à 95 %.

6. Procédé suivant la revendication 1, caractérisé en ce que le degré d'hydrogénation est supérieur à 99 %.

7. Procédé suivant la revendication 1, caractérisé en ce que l'hydrogénation est conduite dans du chlorobenzène.

8. Procédé suivant la revendication 1, caractérisé en ce que la quantité de catalyseur va de 0,08 à 0,2 % en poids.

9. Procédé suivant la revendication 1, caractérisé en ce que la pression va de 30 à 200 bars.